# EUROPEAN PATENT APPLICATION

(11) **EP 4 458 564 A1**
(43) Date of publication of application: **06.11.2024**
(21) Application number: 24176129.5
(22) Date of filing: 15.05.2024
(51) Int. Cl.: B29C 65/48, B29C 65/56, B29C 65/72

(54) **SECONDARY RETENTION FOR ADHESIVE BONDED JOINTS**

(30) Priority: 04.04.2023 US 202318130627
(71) Applicant: Hamilton Sundstrand Corporation, Charlotte, NC 28217-4578 (US)
(72) Inventor: WALSH, Kevin P., Enfield, CT (US); SONG, Shunjun, Farmington, CT (US); IWASINSKI, Miles, Chicopee, MA (US); MAHONEY, Harold R., Holyoke, MA (US); VATTER, Thomas E., Holyoke, MA (US); MCCORD, Patrick, Norwich, CT (US); ARMY, Donald E., Enfield, CT (US)
(74) Representative: Dehns

(57) **Abstract**

A pressure vessel (10) includes a first component (14), a second component (16), and a bonded lap joint (20) between the first and second components (14, 16). The bonded lap joint (20) includes a portion (14a) of the first component (14) which extends about a circumference of the pressure vessel (10), a portion (16a) of the second component (16) which extends about the circumference of the pressure vessel (10) and partially overlaps the portion (14a) of the first component (14), an adhesive bond (22) connecting the portion (14a) of the first component (14) to the portion (16a) of the second component (16) and thereby joining the first and second components (14, 16), and mechanically interlocking structures (28) connecting the portion (14a) of the first component (14) to the portion (16a) of the second component (16). The adhesive bond (22) forms a primary retention mechanism. The mechanically interlocking structures (28) are situated at least partially within each of the portion (14a) of the first component (14) and the portion (16a) of the second component (16), and form a secondary retention mechanism.

## Description

### BACKGROUND

The present disclosure relates generally to secondary retention mechanisms and, in particular, to secondary retention mechanisms for adhesive bonded joints of pressure vessels.

Adhesive bonded joints are commonly used to join composite materials. Pressure vessels, for example, can be formed of multiple components which are joined together by an adhesive bond. In aerospace applications, these bonded joints can be exposed to water, fuel, or hydraulic fluid, and can experience adverse conditions such as pressure and temperature fluctuations, fatigue, and shock loads. Secondary retention devices can be used to help contain any failure of the adhesive bond which serves as the primary retention method. However, some secondary retention mechanisms, such as self-tapping screws, can create fatigue issues during assembly or when the pressure vessel experiences vibration and other stresses.

### SUMMARY

As discussed herein, a pressure vessel includes a first component, a second component, and a bonded lap joint between the first component and second component. The bonded lap j oint includes a portion of the first component which extends about a circumference of the pressure vessel, a portion of the second component which extends about the circumference of the pressure vessel and partially overlaps the portion of the first component, an adhesive bond connecting the portion of the first component to the portion of the second component and thereby joining the first component to the second component, and a plurality of mechanically interlocking structures connecting the portion of the first component to the portion of the second component. The adhesive bond forms a primary retention mechanism. The plurality of mechanically interlocking structures are situated at least partially within each of the portion of the first component and the portion of the second component, and form a secondary retention mechanism.

As further discussed herein, a bonded lap joint includes a portion of a first component of a pressure vessel, a portion of a second component of the pressure vessel, an adhesive bond connecting the portion of the first component to the portion of the second component, and a plurality of mechanically interlocking structures connecting the portion of the first component to the portion of the second component. The portion of the first component extends about a circumference of the pressure vessel. The portion of the second component extends about the circumference of the pressure vessel and at least partially overlaps the portion of the first component. The adhesive bond joins the first component to the second component, and forms a primary retention mechanism. The plurality of mechanically interlocking structures is situated at least partially within each of the portion of the first component and the portion of the second component, and forms a secondary retention mechanism.

The present summary is provided only by way of example, and not limitation. Other aspects of the present disclosure will be appreciated in view of the entirety of the present disclosure, including the entire text, claims, and accompanying figures.

### BRIEF DESCRIPTION OF THE DRAWINGS

FIG. 1A is a perspective view of a pressure vessel including retention pins.
FIG. 1B is a cross-sectional view of the pressure vessel of FIG. 1A at a joint of the pressure vessel.
FIG. 2A is a perspective view of a pressure vessel joint including a retention wire.
FIG. 2B is a perspective cross-sectional view of the pressure vessel joint of FIG. 2A.
FIG. 3A is a perspective cross-sectional view of a pressure vessel joint including retention tabs.
FIG. 3B is a perspective view of the pressure vessel joint of FIG. 3A with a cable tie retained by the retention tabs.
FIG. 4 is a perspective view of a pressure vessel joint including retention loops and a retention clasped strap.
FIG. 5 is a perspective view of a pressure vessel joint including retention loops and a retention hook-and-loop strap.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

Pressure vessels formed of multiple component pieces joined at an adhesive-bonded joint can include failure safeguards in the form of secondary retention mechanisms. These secondary retention mechanisms include mechanically interlocking structures which connect the component pieces. One example of a secondary retention mechanism is a retention pin extending through the two components at the joint. Other examples of secondary retention mechanisms include a wire extending circumferentially about the pressure vessel along the joint, a series of retention tabs which retain a cable tie along the joint, and straps secured through loops protruding from the surface of each component.

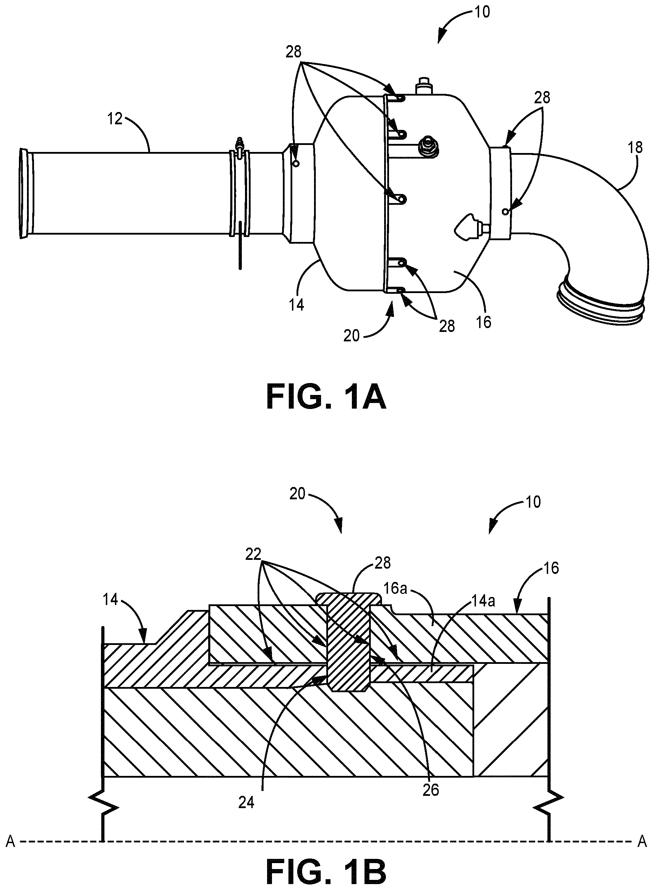

FIG. 1A is a perspective view of pressure vessel 10 oriented about axis A-A (shown in FIG. 1B), which includes first tubing section 12, first component 14, second component 16, second tubing section 18, and bonded lap joint 20. Bonded lap joint 20 includes portion 14a of first component 14 (shown in FIG. 1B), portion 16a of second component 16 (shown in FIG. 1B), adhesive bond 22 (shown in FIG. 1B), first openings 24 in portion 14a (shown in FIG. 1B), second openings 26 in portion 16a (shown in FIG. 1B), and retention pins 28. FIG. 1B is a cross-sectional view of pressure vessel 10 at bonded lap joint 20. FIGS. 1A-1B will be discussed concurrently below.

In the example shown in FIGS. 1A-1B, pressure vessel 10 is a water collector. Pressure vessel 10 can be formed of one or more carbon polyetheretherketone (PEEK) materials. First component 14 and second component 16 are joined together and make up the body of pressure vessel 10. First tubing section 12 and second tubing section 18 can be ducts which connect pressure vessel 10 to other components in, for example, an environmental control system.

Bonded lap j oint 20 extends about the circumference of pressure vessel 10. Portion 14a of first component 14 and portion 16a of second component 16 (the section of second component 16 which overlaps portion 14a) each extend about the circumference of pressure vessel 10 along bonded lap joint 20. Adhesive bond 22 includes an adhesive applied to at least part of one or both of portion 14a and portion 16a, as well as within one or both of first openings 24 and second openings 26. Each first opening 24 is aligned with a second opening 26, and a retention pin 28 extends through both a first opening 24 and a second opening 26. Retention pins 28 can be formed of stainless steel, or other suitable material which does not cause reactions such as galvanic corrosion. Pressure vessel 10 can include multiple bonded lap joints and/or other suitable joints (for example, between first component 14 and first tubing section 12, and/or between second component 16 and second tubing section 18) which include retention pins 28, first openings 24, and second openings 26.

Adhesive bond 22 is the primary retention mechanism for bonded lap joint 20. Adhesive bond 22 connects portion 14a to portion 16a, and in this manner joins first component 14 to second component 16. Each retention pin 28 mechanically interlocks with a first opening 24 and a second opening 26. In some examples, retention pins 28 can additionally be adhesively bonded to portions 14a and 16a via first opening 24 and second opening 26 in the same manner as adhesive bond 22 between first component 14 and second component 16. In these examples, adhesive can be placed between retention pins 28 and first component 14 and/or second component 16, and retention pins 28 need not directly abut first component 14 and second component 16 in order to mechanically interlock. Similarly, first tubing section 12 can be adhesively connected to pressure vessel 10 and second tubing section 18 can be adhesively connected to pressure vessel 10 using adhesively bonded lap joints and adhesively bonded pins. In this manner, retention pins 28 connect portion 14a to portion 16a, in addition to the connection provided by adhesive bond 22. Retention pins 28, first openings 24, and second openings 26 form a secondary retention mechanism for bonded lap joint 20 which is partially located within first component 14 and second component 16. Retention pins 28 resist the shear load between first component 14 and second component 16. In the same manner, retention pins in bonded lap joints between pressure vessel 10 and first tubing section 12 and/or second tubing section 18. This secondary retention mechanism provides additional support to pressure vessel 10 in the case of damage to, rupture of, or other failure of adhesive bond 22.

In the example shown in FIGS. 1A-1B, retention pins 28, first openings 24, and second openings 26 are approximately equally spaced along the circumference of pressure vessel 10. In some examples, the number of retention pins 28 within bonded lap joint 20, or within pressure vessel 10, can be determined by an expected pressure level experienced by pressure vessel 10. Additionally or alternatively, the location, distribution, and/or diameter size of retention pins 28 can be determined by this expected pressure level.

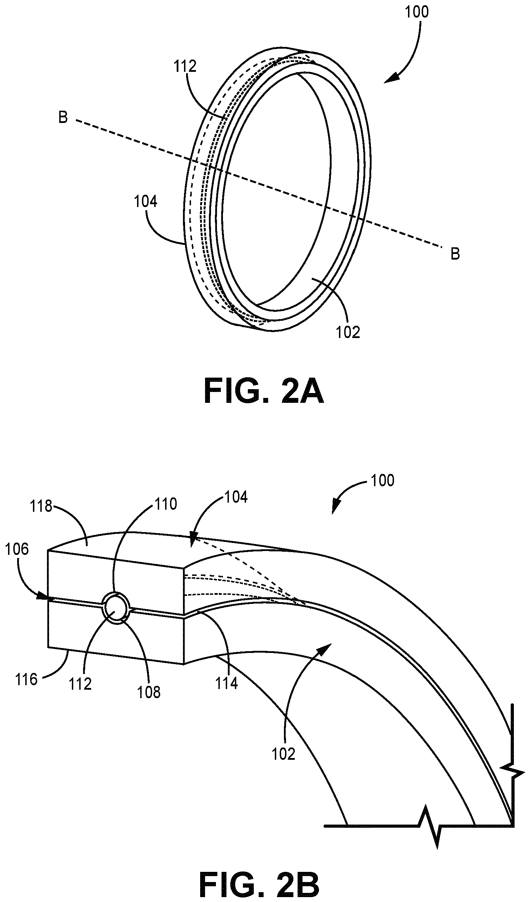

FIG. 2A is a perspective view of bonded lap joint 100 within a pressure vessel formed of two components (such as first component 14 and second component 16 of pressure vessel 10, described above in reference to FIGS. 1A-1B). Bonded lap joint 100 includes first component portion 102, second component portion 104, adhesive bond 106 (shown in FIG. 2B), first channel 108 (shown in FIG. 2B), second channel 110 (shown in FIG. 2B), and retention wire 112. FIG. 2B is a perspective cross-sectional view of bonded lap joint 100. FIGS. 2A-2B will be discussed concurrently below.

Bonded lap joint 100 extends about the circumference of the pressure vessel, and includes first component portion 102 and second component portion 104 which overlaps first component portion 102. First component portion 102 and second component portion 104 can each extend about the circumference of the pressure vessel along bonded lap joint 100. Adhesive bond 106 includes an adhesive applied to at least part of one or both of first component portion 102 and second component portion 104. First channel 108 is formed within first component portion 102, extends lengthwise circumferentially about the pressure vessel, and extends depthwise radially inward away from interior interface 114 of bonded lap j oint 100 and toward interior surface 116 of first component portion 102 (and, accordingly, radially inward away from the exterior surface of the pressure vessel) with respect to axis B-B about which the pressure vessel is oriented. Second channel 110 is formed within second component portion 104, extends lengthwise along the circumference of the pressure vessel, and extends depthwise radially outward away from interior interface 114 of bonded lap j oint 100 and toward exterior surface 118 of second component portion 104 (and, accordingly, radially outward away from the interior surface of the pressure vessel) with respect to axis B-B. First channel 108 is aligned with and faces second channel 110. Both first channel 108 and second channel 110 have a semi-circular profile. Retention wire 112 extends along first channel 108 and second channel 110, such that each of first channel 108 and second channel 110 receive a portion of retention wire 112.

To facilitate the insertion of retention wire 112 into bonded lap joint 100, a circular entrance channel (not shown in FIGS. 2A-2B) can be added to second component portion 104 at a shallow angle and extending from exterior surface 118 of second component portion 104 to second channel 110. This allows retention wire 112 to be inserted into first channel 108 and second channel 110 immediately after they have been adhesively bonded. Additional circular channels can also be added to allow any excess adhesive to escape as retention wire 112 is being inserted into the circular channel created by first channel 108 and second channel 110.

Adhesive bond 106 is the primary retention mechanism for bonded lap joint 100. Retention wire 112 mechanically interlocks with first channel 108 and second channel 110. Retention wire 112, first channel 108, and second channel 110 form a secondary retention mechanism for bonded lap j oint 100 which is partially located within first component portion 102 and second component portion 104. Retention wire 112 resists the shear load between first component portion 102 and second component portion 104.

In the example shown in FIGS. 2A-2B, bonded lap joint 100 includes one retention wire 112. In some examples, the number of retention wires 112 within bonded lap joint 100, or at other locations within the pressure vessel, can be determined by an expected pressure level experienced by the pressure vessel. Additionally or alternatively, the diameter size of retention wire(s) 112 can be determined by this expected pressure level.

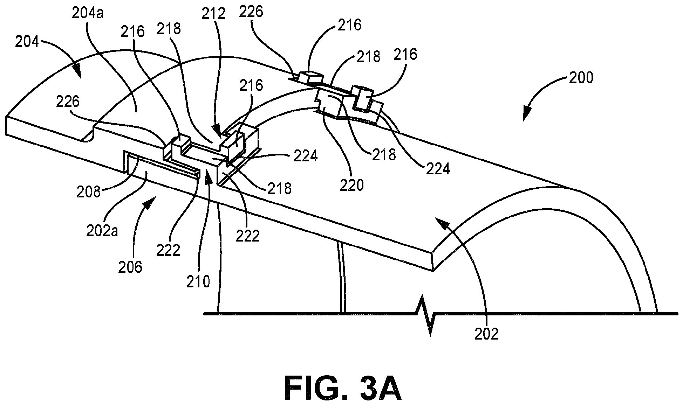

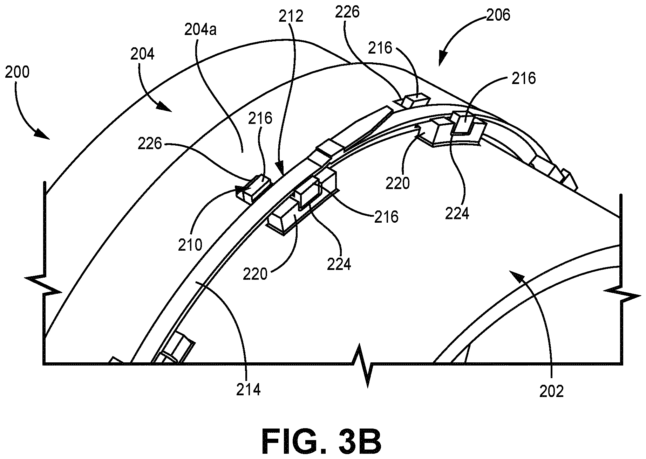

FIG. 3A is a perspective cross-sectional view of a section of pressure vessel 200, which includes first component 202, second component 204, and bonded lap joint 206. Bonded lap joint 206 includes portion 202a of first component 202, portion 204a of second component 204, adhesive bond 208, first retention tabs 210 in portion 202a, second retention tabs 212 in portion 204a, and cable tie 214 (shown in FIG. 3B). FIG. 3B is a perspective view of the section of pressure vessel 200 shown in FIG. 3A. FIGS. 3A-3B will be discussed in turn below.

Bonded lap joint 206 extends about the circumference of pressure vessel 200. Portion 204a of second component 204 overlaps portion 202a of first component 202, and portion 202a and portion 204a can each extend about the circumference of pressure vessel 200 along bonded lap joint 206. Adhesive bond 208 includes an adhesive applied to at least part of one or both of portion 202a and portion 204a. In some examples, adhesive can be applied to all contacting surfaces between portions 202a and 204a.

Each retention tab 210, 212 includes radial tab portion 216 and axial tab portion 218. Radial tab portions 216 extend radially outward from the axis about which pressure vessel 200 is oriented (not shown in FIGS. 3A-3B). Axial tab portions 218 extend axially along this axis, and each radial tab portion 216 extends from an end of each axial tab portion 218. Bonded lap joint 206 can include additional recessed and/or protruding features which facilitate the interlocking of retention tabs 210, 212. In the example shown in FIGS. 3A-3B, bonded lap joint 206 includes bases 220 of axial tab portions 218 (extending radially outward from the surface of portion 202a), slots 222 defined by bases 220 and axial tab portions 218, first recesses 224 formed in portion 202a which receive axial tab portions 218 formed in portion 204a, and second recesses 226 formed in portion 204a which receive axial tab portions 218 formed in portion 202a.

First retention tabs 210 are formed in an edge of first component 202. Second retention tabs 212 are formed in an edge of second component 204 adjacent to the edge of first component 202, such that second retention tabs 212 are adjacent to, and interlock with, first retention tabs 210 when pressure vessel 200 is assembled. Cable tie 214 can be formed of stainless steel, or other suitable material which does not cause reactions such as galvanic corrosion.

Adhesive bond 208 is the primary retention mechanism for bonded lap joint 206. Cable tie 214 mechanically interlocks with first retention tabs 210 and second retention tabs 210, forming a secondary retention mechanism for bonded lap joint 206 which is partially located within first component 202 and second component 204. Retention tabs 210, 212 and cable tie 214 resist the shear load between first component 202 and second component 204 and prevent the axial separation of first component 204 and second component 202 in the event of a failure of adhesive bond 208 (the primary retention mechanism). If adhesive bond 208 fails or is otherwise compromised, retention tabs 210, 212 and cable tie 214 can help to prevent the axial separation of second component 204 from first component 202, and retention tabs 210, 212 can prevent the rotation of first component 202 relative to second component 204.

In some examples, the number of pairings of retention tabs 210, 212 within bonded lap joint 206, or at other locations within pressure vessel 200, can be determined by an expected pressure level experienced by pressure vessel 200. Additionally or alternatively, the location, distribution, and/or size of retention tabs 210, 212 and/or cable tie(s) 214 can be determined by this expected pressure level.

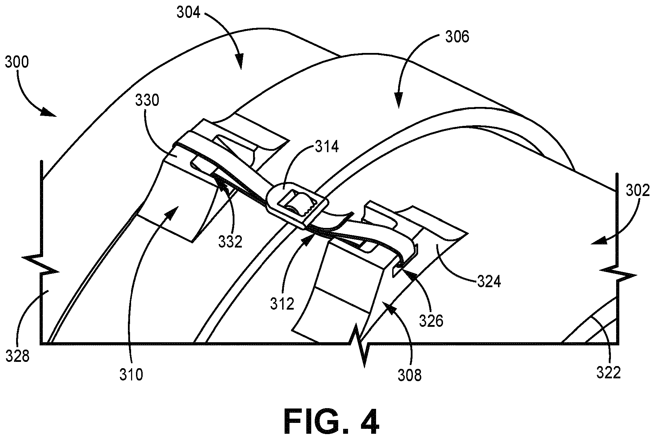

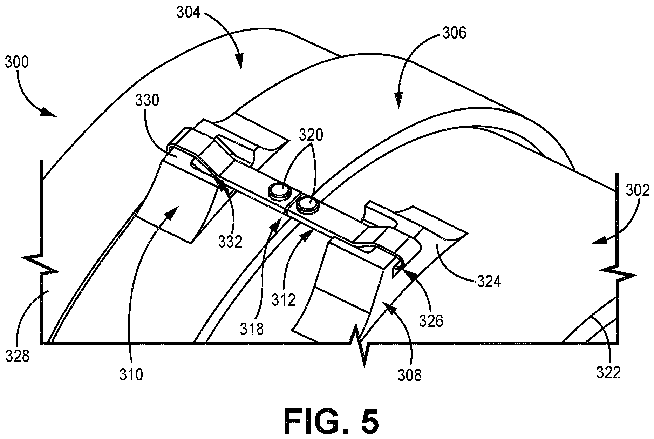

FIG. 4 is a perspective view of a section of pressure vessel 300, which includes first component 302, second component 304, and bonded lap joint 306. Bonded lap joint 306 includes first retention loop 308 in first component 302, second retention loop 310 in second component 304, and clasped retention strap 312. Clasped retention strap 312 includes clasp 314. FIG. 5 is a perspective view of the section of pressure vessel 300 shown in FIG. 4 with hook-and-loop retention strap 316, which includes hook-and-loop fastener section 318 and snaps 320. Bonded lap joint 306 can additionally include an adhesive bond (not shown in FIGS. 4-5) which joins first component 302 to second component 304. In the same manner as first component 14 and second component 16 (both described above in reference to FIGS. 1A-1B), a portion of second component 304 overlaps a portion of first component 302. FIGS. 4-5 will be discussed concurrently below.

Bonded lap joint 306 extends about the circumference of pressure vessel 300. The adhesive bond can be an adhesive applied to at least part of one or both of first component 302 and second component 304. First retention loop 308 extends generally radially outward from exterior surface 322 (with respect to the axis about which pressure vessel 300 is oriented) of first component 302. First retention loop 308 can include first body portion 324 which extends from exterior surface 322 and first opening 326 formed within first body portion 324. First opening 326 can receive clasped retention strap 312 or hook-and-loop retention strap 316 such that clasped retention strap 312 or hook-and-loop retention strap 316 can pass through first retention loop 308. Similarly, second retention loop 310 extends generally radially outward from exterior surface 328 of second component 304, and can include second body portion 330 which extends from exterior surface 328 and second opening 332 formed within second body portion 330. Second opening 332 can receive clasped retention strap 312 or hook-and-loop retention strap 316 such that clasped retention strap 312 or hook-and-loop retention strap 316 can pass through second retention loop 310. In the example shown in FIGS. 4-5, first body portion 324 and second body portion 330 are approximately trapezoidal in profile at the ends axially furthest from each other, and include a recessed section at the ends facing each other. First body portion 324 and/or second body portion 330 can be formed of the same material as first component 302 and/or second component 304. First opening 326 and second opening 332 can be approximately rectangular in shape and can have rounded corners, and can have a width which is greater than the width of clasped retention strap 312 and/or hook-and-loop retention strap 316. Clasped retention strap 312 can be inserted through first opening 326 and second opening 332 and fastened by clasp 314. Similarly, in examples including hook-and-loop retention strap 316, hook-and-loop retention strap 316 can be inserted through first opening 326 and second opening 332 and fastened by hook-and-loop fastener section 318 and/or snaps 320.

The adhesive bond between first component 302 and second component 304 is the primary retention mechanism for bonded lap joint 306. Clasped retention strap 312 and hook-and-loop retention strap 316 each mechanically interlock with first retention loop 308 and second retention loop 310, forming a secondary retention mechanism for bonded lap joint 306 which is partially located within first component 302 and second component 304. In the event of a failure of the primary retention adhesive bond, clasped retention strap 312 and hook-and-loop retention strap 316 resist the tensile load between first component 302 and second component 304.

In the example shown in FIGS. 4-5, one retention strap (either clasped retention strap 312 or hook-and-loop retention strap 316) within bonded lap joint 306 is shown. In examples having multiple retention straps, the retention straps can be equally spaced about the circumference of pressure vessel 300. In some examples, the number of retention loop and strap systems within bonded lap joint 306, or at other locations within pressure vessel 300, can be determined by an expected pressure level experienced by pressure vessel 300. Additionally or alternatively, the material composition, fastener type, width, thickness, location, and/or distribution of the retention strap(s) can be determined by this expected pressure level.

It should be understood that, while each described pressure vessel is illustrated and described as including one type of secondary retention mechanism, any combination of the described secondary retention mechanisms can be used as a secondary retention system.

A bonded lap joint for a pressure vessel as described herein provides numerous advantages. Secondary retention mechanisms help to contain failures of the primary retention mechanism within the pressure vessel. In the event of a failure of the primary retention adhesive bond, these secondary retention mechanisms can resist the shear and/or tensile loads on the pressure vessel. The use of secondary retention mechanisms such as retention pins, retention wires, retention tabs, and/or retention straps can eliminate fatigue stress risers such as those induced by self tapping screws which are currently used in production pressure vessel designs. Finally, the secondary retention mechanism selected can be tailored based on the pressure vessel's expected pressure levels.

### Discussion of Possible Embodiments

The following are non-exclusive descriptions of possible embodiments of the present invention.

A pressure vessel includes a first component, a second component, and a bonded lap joint between the first component and second component. The bonded lap joint includes a portion of the first component which extends about a circumference of the pressure vessel, a portion of the second component which extends about the circumference of the pressure vessel and partially overlaps the portion of the first component, an adhesive bond connecting the portion of the first component to the portion of the second component and thereby joining the first component to the second component, and a plurality of mechanically interlocking structures. The adhesive bond forms a primary retention mechanism. The plurality of mechanically interlocking structures connect the portion of the first component to the portion of the second component and is situated at least partially within each of the portion of the first component and the portion of the second component. The plurality of mechanically interlocking structures forms a secondary retention mechanism.

The pressure vessel of the preceding paragraph can optionally include, additionally and/or alternatively, any one or more of the following features, configurations and/or additional components:

A pressure vessel according to an exemplary embodiment of the present invention, among other possible things, includes a first component, a second component, and a bonded lap joint between the first component and second component. The bonded lap joint includes a portion of the first component which extends about a circumference of the pressure vessel, a portion of the second component which extends about the circumference of the pressure vessel and partially overlaps the portion of the first component, an adhesive bond connecting the portion of the first component to the portion of the second component and thereby joining the first component to the second component, and a plurality of mechanically interlocking structures. The adhesive bond forms a primary retention mechanism. The plurality of mechanically interlocking structures connect the portion of the first component to the portion of the second component and is situated at least partially within each of the portion of the first component and the portion of the second component. The plurality of mechanically interlocking structures forms a secondary retention mechanism.

A further embodiment of the foregoing pressure vessel, wherein the plurality of mechanically interlocking structures includes a first opening in the portion of the first component, a second opening in the portion of the first component, and at least one retention pin extending through the first opening and the second opening. The second opening is aligned with the first opening.

A further embodiment of any of the foregoing pressure vessels, further comprising a plurality of first openings in the portion of the first component and a plurality of second openings in the portion of the second component which is aligned with the plurality of first openings. The at least one retention pin comprises a plurality of retention pins circumferentially spaced along the bonded lap j oint.

A further embodiment of any of the foregoing pressure vessels, wherein the plurality of retention pins is equally spaced about the circumference of the pressure vessel.

A further embodiment of any of the foregoing pressure vessels, wherein a number of retention pins in the plurality of retention pins is determined by an expected pressure level experienced by the pressure vessel.

A further embodiment of any of the foregoing pressure vessels, wherein a size of each retention pin in the plurality of retention pins is determined by an expected pressure level experienced by the pressure vessel.

A further embodiment of any of the foregoing pressure vessels, wherein the plurality of mechanically interlocking structures comprises a first channel in the portion of the first component, a second channel in the portion of the second component, and at least one retention wire extending along the first channel and the second channel. The first channel extends depthwise radially inward away from an exterior surface of the pressure vessel with respect to an axis about which the pressure vessel is oriented, and extends lengthwise circumferentially about the pressure vessel. The second channel extends depthwise radially outward away from an interior surface of the pressure vessel with respect to the axis, and extends lengthwise circumferentially about the pressure vessel. The second channel is aligned with and facing the first channel. The first channel receives a first portion of the retention wire and the second channel receives a second portion of the retention wire.

A further embodiment of any of the foregoing pressure vessels, wherein a thickness of the at least one retention wire is determined by an expected pressure level experienced by the pressure vessel.

A further embodiment of any of the foregoing pressure vessels, wherein the plurality of mechanically interlocking structures comprises a first plurality of retention tabs in an edge of the first component and a second plurality of retention tabs in an edge of the second component which is adjacent to the edge of the first component. The second plurality of retention tabs interlocks with the first plurality of retention tabs.

A further embodiment of any of the foregoing pressure vessels, wherein each retention tab in the first plurality of retention tabs and the second plurality of retention tabs includes a radial tab portion extending radially outward from an axis about which the pressure vessel is oriented and an axial tab portion extending axially along the axis and having an end from which the radial tab portion extends. The plurality of mechanically interlocking structures further comprises a cable tie retained by each radial tab portion and each axial tab portion.

A further embodiment of any of the foregoing pressure vessels, wherein the cable tie is stainless steel.

A further embodiment of any of the foregoing pressure vessels, wherein the plurality of mechanically interlocking structures comprises a first retention loop, a second retention loop, and a retention strap. The first retention loop extends radially outward from an exterior surface of the first component with respect to an axis about which the pressure vessel is oriented. The second retention loop extends radially outward from an exterior surface of the second component with respect to the axis. The retention strap passes through the first retention loop and the second retention loop.

A further embodiment of any of the foregoing pressure vessels, wherein the retention strap includes a clasp fastener.

A further embodiment of any of the foregoing pressure vessels, wherein the retention strap includes a hook-and-loop fastener section.

A further embodiment of any of the foregoing pressure vessels, wherein the first component and the second component are composed of carbon PEEK.

A bonded lap joint includes a portion of a first component of a pressure vessel, a portion of a second component of the pressure vessel, an adhesive bond connecting the portion of the first component to the portion of the second component, and a plurality of mechanically interlocking structures connecting the portion of the first component to the portion of the second component. The portion of the first component extends about a circumference of the pressure vessel. The portion of the second component extends about the circumference of the pressure vessel and at least partially overlaps the portion of the first component. The adhesive bond joins the first component to the second component, and forms a primary retention mechanism. The plurality of mechanically interlocking structures is situated at least partially within each of the portion of the first component and the portion of the second component, and forms a secondary retention mechanism.

The bonded lap joint of the preceding paragraph can optionally include, additionally and/or alternatively, any one or more of the following features, configurations and/or additional components:

A bonded lap joint according to an exemplary embodiment of the present invention, among other possible things, includes a portion of a first component of a pressure vessel, a portion of a second component of the pressure vessel, an adhesive bond connecting the portion of the first component to the portion of the second component, and a plurality of mechanically interlocking structures connecting the portion of the first component to the portion of the second component. The portion of the first component extends about a circumference of the pressure vessel. The portion of the second component extends about the circumference of the pressure vessel and at least partially overlaps the portion of the first component. The adhesive bond joins the first component to the second component, and forms a primary retention mechanism. The plurality of mechanically interlocking structures is situated at least partially within each of the portion of the first component and the portion of the second component, and forms a secondary retention mechanism.

A further embodiment of the foregoing bonded lap joint, wherein the plurality of mechanically interlocking structures includes a first opening in the portion of the first component, a second opening in the portion of the first component, and at least one retention pin extending through the first opening and the second opening. The second opening is aligned with the first opening.

A further embodiment of any of the foregoing bonded lap joints, wherein the plurality of mechanically interlocking structures comprises a first channel in the portion of the first component, a second channel in the portion of the second component, and at least one retention wire extending along the first channel and the second channel. The first channel extends depthwise radially inward away from an exterior surface of the pressure vessel with respect to an axis about which the pressure vessel is oriented, and extends lengthwise circumferentially about the pressure vessel. The second channel extends depthwise radially outward away from an interior surface of the pressure vessel with respect to the axis, and extends lengthwise circumferentially about the pressure vessel. The second channel is aligned with and facing the first channel. The first channel receives a first portion of the retention wire and the second channel receives a second portion of the retention wire.

A further embodiment of any of the foregoing bonded lap joints, wherein the plurality of mechanically interlocking structures comprises a first plurality of retention tabs in an edge of the first component and a second plurality of retention tabs in an edge of the second component which is adjacent to the edge of the first component. The second plurality of retention tabs interlocks with the first plurality of retention tabs. Each retention tab in the first plurality of retention tabs and the second plurality of retention tabs includes a radial tab portion extending radially outward from an axis about which the pressure vessel is oriented and an axial tab portion extending axially along the axis and having an end from which the radial tab portion extends. The plurality of mechanically interlocking structures further comprises a cable tie retained by each radial tab portion and each axial tab portion.

A further embodiment of any of the foregoing bonded lap joints, wherein the plurality of mechanically interlocking structures comprises a first retention loop, a second retention loop, and a retention strap. The first retention loop extends radially outward from an exterior surface of the first component with respect to an axis about which the pressure vessel is oriented. The second retention loop extends radially outward from an exterior surface of the second component with respect to the axis. The retention strap passes through the first retention loop and the second retention loop.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A pressure vessel comprising:
a first component;
a second component; and
a bonded lap j oint between the first component and second component, the bonded lap joint comprising:
a portion of the first component which extends about a circumference of the pressure vessel;
a portion of the second component which extends about the circumference of the pressure vessel and partially overlaps the portion of the first component;
an adhesive bond connecting the portion of the first component to the portion of the second component and thereby joining the first component to the second component, the adhesive bond forming a primary retention mechanism; and
a plurality of mechanically interlocking structures connecting the portion of the first component to the portion of the second component and situated at least partially within each of the portion of the first component and the portion of the second component, the plurality of mechanically interlocking structures forming a secondary retention mechanism.

2. The bonded lap joint of claim 1, wherein the plurality of mechanically interlocking structures comprises:
a first opening in the portion of the first component;
a second opening in the portion of the first component, the second opening being aligned with the first opening; and
at least one retention pin extending through the first opening and the second opening.

3. The pressure vessel of claim 2, wherein the at least one retention pin comprises a plurality of retention pins circumferentially spaced along the bonded lap joint, and further comprising a plurality of first openings in the portion of the first component and a plurality of second openings in the portion of the second component which is aligned with the plurality of first openings.

4. The pressure vessel of claim 3, wherein the plurality of retention pins is equally spaced about the circumference of the pressure vessel, or wherein a number of retention pins in the plurality of retention pins is determined by an expected pressure level experienced by the pressure vessel, or wherein a size of each retention pin in the plurality of retention pins is determined by an expected pressure level experienced by the pressure vessel.

5. The pressure vessel of any preceding claim, wherein the plurality of mechanically interlocking structures comprises:
a first channel in the portion of the first component, extending depthwise radially inward away from an exterior surface of the pressure vessel with respect to an axis about which the pressure vessel is oriented, and extending lengthwise circumferentially about the pressure vessel;
a second channel in the portion of the first component, extending depthwise radially outward away from an interior surface of the pressure vessel with respect to the axis, and extending lengthwise circumferentially about the pressure vessel, wherein the second channel is aligned with and facing the first channel; and
at least one retention wire extending along the first channel and the second channel such that the first channel receives a first portion of the retention wire and the second channel receives a second portion of the retention wire, and optionally wherein a thickness of the at least one retention wire is determined by an expected pressure level experienced by the pressure vessel.

6. The pressure vessel of any preceding claim, wherein the plurality of mechanically interlocking structures comprises:
a first plurality of retention tabs in an edge of the first component; and
a second plurality of retention tabs in an edge of the second component which is adjacent to the edge of the first component, the second plurality of retention tabs interlocking with the first plurality of retention tabs, and optionally wherein:
each retention tab in the first plurality of retention tabs and the second plurality of retention tabs includes:
a radial tab portion extending radially outward from an axis about which the pressure vessel is oriented; and
an axial tab portion extending axially along the axis and having an end from which the radial tab portion extends; and
the plurality of mechanically interlocking structures further comprises a cable tie retained by each radial tab portion and each axial tab portion.

7. The pressure vessel of claim 6, wherein the cable tie is stainless steel.

8. The pressure vessel of any preceding claim, wherein the plurality of mechanically interlocking structures comprises:
a first retention loop extending radially outward from an exterior surface of the first component with respect to an axis about which the pressure vessel is oriented;
a second retention loop extending radially outward from an exterior surface of the second component with respect to the axis; and
a retention strap which passes through the first retention loop and the second retention loop.

9. The pressure vessel of claim 8, wherein the retention strap includes a clasp fastener, or wherein the retention strap includes a hook-and-loop fastener section.

10. The pressure vessel of any preceding claim, wherein the first component and the second component are composed of carbon PEEK.

11. A bonded lap joint comprising:
a portion of a first component of a pressure vessel which extends about a circumference of the pressure vessel;
a portion of a second component of the pressure vessel which extends about the circumference of the pressure vessel and at least partially overlaps the portion of the first component;
an adhesive bond connecting the portion of the first component to the portion of the second component and thereby joining the first component to the second component, the adhesive bond forming a primary retention mechanism; and
a plurality of mechanically interlocking structures connecting the portion of the first component to the portion of the second component and situated at least partially within each of the portion of the first component and the portion of the second component, the plurality of mechanically interlocking structures forming a secondary retention mechanism.

12. The bonded lap joint of claim 11, wherein the plurality of mechanically interlocking structures comprises:
a first opening in the portion of the first component;
a second opening in the portion of the first component, the second opening being aligned with the first opening; and
at least one retention pin extending through the first opening and the second opening.

13. The bonded lap joint of claim 11 or 12, wherein the plurality of mechanically interlocking structures comprises:
a first channel in the portion of the first component, extending depthwise radially outward away from an interior surface of the pressure vessel, and extending lengthwise circumferentially about the pressure vessel;
a second channel in the portion of the second component, extending depthwise radially inward away from an exterior surface of the pressure vessel, and extending lengthwise circumferentially about the pressure vessel, wherein the second channel is aligned with and facing the first channel; and
at least one retention wire extending along the first channel and the second channel such that the first channel receives a first portion of the retention wire and the second channel receives a second portion of the retention wire.

14. The bonded lap joint of claim 11, 12 or 13, wherein the plurality of mechanically interlocking structures comprises:
a first plurality of retention tabs in an edge of the first component;
a second plurality of retention tabs in an edge of the second component which is adjacent to the edge of the first component, the second plurality of retention tabs interlocking with the first plurality of retention tabs; and
a cable tie;
wherein:
each retention tab in the first plurality of retention tabs and the second plurality of retention tabs includes:
a radial tab portion extending radially outward from an axis about which the pressure vessel is oriented; and
an axial tab portion extending axially along the axis and having an end from which the radial tab portion extends; and
the cable tie is retained by each radial tab portion and each axial tab portion.

15. The bonded lap joint of any of claims 12 to 14, wherein the plurality of mechanically interlocking structures comprises:
a first retention loop extending radially outward from an exterior surface of the first component with respect to an axis about which the pressure vessel is oriented;
a second retention loop extending radially outward from an exterior surface of the second component with respect to the axis; and
a retention strap which passes through the first retention loop and the second retention loop.
